# EUROPEAN PATENT SPECIFICATION

(11) **EP 1 613 721 B1**
(45) Date of publication and mention of the grant of the patent: **18.06.2008**
(21) Application number: 04709770.4
(22) Date of filing: 10.02.2004
(51) Int. Cl.: C12G 3/02

(54) **FERMENTED WINE MADE FROM FRUIT OF ARALIACEOUS SHRUBS, AND METHOD FOR PRODUCING THEREOF**
VERGORENER WEIN AUS DER FRUCHT DES ARALIA ELATA-STRAUCHES UND HERSTELLUNGSVERFAHREN DAFÜR
VIN FERMENTE TIRE DU FRUIT D'ARALIACEES ET METHODE DE FABRICATION

(30) Priority: 08.04.2003 KR 2003021930; 24.12.2003 KR 2003096224
(43) Date of publication of application: 11.01.2006
(73) Proprietor: Jeongseon County, Jeongseon Kangweon-do 233-804 (KR)
(72) Inventor: CHOI, Dae-Sung, Jeongseon Kangweon-do 233-805 (KR)
(74) Representative: McKelvey, Ian Edward
(86) International application number: PCT/KR2004/000253
(87) International publication number: WO 2004/090088

(56) References cited:
- JP-A- 5 123 154
- JP-A- 2002 291 460
- KR-A- 20000 001 287
- KR-A- 20000 072 666
- KR-A- 20020 026 900
- KR-A- 20030 013 216
- KR-B1- 930 008 118
- DATABASE WPI Section Ch, Week 200311 Derwent Publications Ltd., London, GB; Class D16, AN 2003-117969 XP002371670 & KR 2002 064 716 A (CHOI J S) 9 August 2002 (2002-08-09)

## Description

### TECHNICAL FIELD

The present invention relates to a process for the preparation of fermented wine made from fruits of dicotyledonous deciduous shrub or latifoliate shrub in the family *Araliaelata,* and particularly to a process for the preparation of fermented wine made from fruits of *Acanthopanax sessiliflorus* or *Eleutherococcus senticosus* as main material.

### BACKGROUND

*Acanthopanax sessiliflorus* and *Acanthopanax senticosus* (or *Eleutherococcus senticosus*) are deciduous and broadleaf shrubs in the family *Araliaelata* like ginseng. Especially, *Acanthpanax senticosus* resembles the wild ginseng in the shape and is also called as Siberian ginseng in Russia, America and Europe. *Acanthopanax sessiliflorus* and *Acanthopanax senticosus* are distributed around Baekdu mountain in North Korea covering Manchuria, Maritime Province of Siberia, alpine belts of Korea and the northeast region of Hokkaido, Japan. Often, they may grow wildly in the restricted area including Asian countries over 40° north latitude or hilly area over 600 - 1,000 m above the sea level.

The *Acanthopanax sp.* shrub attracts global attention as a novel medicinal herb, since it has no toxicity in the whole tree and also has the broad range of pharmaceutical efficacy. In the Olympic Games, the players of the old Soviet Union have increased records after administering *Acanthopanax sp.* herb. In 1986, it is also disclosed in the scientific journal, *New Scientist* that a number of people including explorer, astronomer, soldier and the like often took *Acanthopanax sp*. to enhance the physical strength and the intensive power highly. Therefore, *Acanthopanax sessiliflorus* and *Acanthopanax senticosus* become a public concern on account of these effects.

*Acanthopanax sessiliflorus* or *Acanthopanax senticosus* has been already elucidated to contain acanthosides having the most outstanding activity biologically and other useful constituents.

For a long time, *Acanthopanax sessiliflorus* or *Acanthopanax senticosus* has been known as an herbal plant to improve the personal health and investigated in various aspects regarding its constituents and efficacies. These herbs are identified by such a research to affect the congenital and specific immune system in the living body of human being and to enhance the anti-bacterial activity and the anti-tumor activity.

In addition, *Acanthopanax sessiliflorus* and *Acanthopanax senticosus* include not only glycosides such as Acanthoside B and D and soluble polysacchrides enhancing the immunity in a large amount, but also Sylrgin, cumarin and the like as a glycoside in their roots. The above-mentioned Acanthosides are illustrated to have a remarkable effect upon the hematosis of bone marrow, since they may stimulate the RNA synthesis. The soluble polysaccharides have been demonstrated to promote the leukocyte because they may increase the number of macrophage.

Hence, *Acanthopanax sessiliflorus* and *Acanthopanax senticosus* can activate the function of living body and be effective upon autoimmune diseases. They are also a good restorative if administered for the patient lacking in spirit and energy.

On the other hand, *Acanthopanax sessiliflorus* and *Acanthopanax senticosus* are collected in the period between summer and autumn and dried in roots and barks, which is called as "Ogapi" or "Ogalpi". "Ogapi" has been used for a sort of medicine in ancient times and is known to treat the stroke or the weak constitution traditionally as Oriental medicine, since it contains various components advantageous for human being as described above.

Furthermore, Ogapi can be a material to manufacture wine and these wines are referred to as "Ogapi wine" or "Ogalpi wine".

Precisely, the root coat and the bark (namely "Ogapi") derived from *Acanthopanax sessiliflorus* and *Acanthopanax senticosus* tree are well washed by using water, dried, cut to pieces in 2 ∼ 3 cm of size, poured into a container, soaked by adding liquor and sugar and fermented. Then, the container is stored at cool temperature for about 1 ∼ 3 months to extrude effective components of Ogapi by alcohol. For a long time, Ogapi wine manufactured by the above-mentioned procedure has been an invigorant and is reported to be highly effective on lumbago, numbness in hands and feet, hemiplegia and the like.

Recently, some processes of preparation functional beverages and alcohols have been developed by using a tree such as *Acanthopanax sessiliflorus* and *Acanthopanax senticosus.* In detail, it is disclosed in Korean Patent Application Laid-open No. 1999-001026 that the sport drink for replenishing water and electrolytes can be manufactured to add *Acanthopanax sp.* extract to existed beverage. In Korean Patent Application Laid-open No. 2002-24775, the process for producing liquor is also demonstrated, which comprises steps: (A) extracting Oriental herbes such as *Acanthopanax sessiliflorus* by using the mixture of sugar and citric acid; and (B) mixing alcohol and distilled water, filtrating and fermenting under Commercial Code.

KR 2002-0064716 describes the preparation of a liqueur by extracting the finely cut and pulverised leaves, stems and fruit of Acanthopanax with water under heating; admixing the extract with alcoholic spirit; aging and re-fermenting the admixture. This differs from the present invention which does not involve the use of alcoholic spirit.

KR 2002-0026900 describes the preparation of a wine by anaerobic fermentation in the absence of light of Acanthopanax cortex (not fruit). This provides an "Ogapi" wine as described above.

Meanwhile, it is identified that Acanthoside D is found in a large amount from fruits of *Acanthopanax sessiliflorus* and *Acanthopanax senticosus,* although it is reported to be mostly included in roots. Chiisanoside as a secotriterpenoid glycoside also exist in these fruits even if it often be contained only in leaves of a certain Acanthopanax species. Furthermore, the pharmaceutical efficacy of Chiisanoside is investigated by using MTT analysis for anticancer activity, renal toxicity and the like. It is verified that these fruits contain approximately 10-fold content of glutamate than common crops.

Presently, the roots and barks of *Acanthopanax sessiliflorus* and *Acanthopanax senticosus,* so called as "Ogapi" are illustrated to have the traditional effect and use and thus adopted widely, but the fruits of trees are left or discarded in practice.

Hence, it is necessary to explore how to use the fruits of Acanthopanax sessiliflorus and Acanthopanax senticosus efficiently, to exploit various effective constituents and further to find out how to increase the income of farmhouse by using the very fruits.

### DISCLOSURE OF THE INVENTION

The present inventors have observed that *Acanthopanax sessiliflorus* and *Acanthopanax senticosus* include several sorts of functional sugars in fruits a lot and attempted to develop novel fermented wine which is distinguished from conventional Ogapi wine prepared by alcohol extraction, has the more outstanding sense to drink by fermenting fruits and can sustain various useful constituents of these fruits.

Therefore, the object of the present invention is to provide a process for production of fermented wine made from the fruits of *Acanthopanax sessiliflorus* and/or Acanthopanax *senticosus* as main material.

Another object of the present invention is to provide a process for production of fermented wine made from the fruits of *Acanthopanax sessiliflorus* and/or *Acanthopanax senticosus* as main material, in which *Rosa davurica* extract and *Rhynchosia nolubilis* extract are added to improve the functional property and the product quality of the fermented wine.

In order to attain the above-mentioned objects, the present invention provides a process for the preparation of fermented wine made from the fruit of deciduous shrub or latifoliate shrub in the family *Araliaelata* as main material. Preferably, the shrubs in the family *Araliaelata* are *Acanthopanax sessiliflorus* and *Acanthopanax senticosus.*

The present invention provides a process for production of fermented wine, which comprises (A) step for preparation of a fermention solution; (B) step for fermentation; and (C) step for stopping the reaction.

In order to improve the functional property and the product quality of fermented wine described above, *Rosa davurica* Pallas extract and *Rhynchosia nolubilis* extract can be added before fermentation. Preferably in said step for preparation of a fermention solution, the water extract obtained from 0.05 - 0.25 kg of *Rosa davurica* and/or the water extract obtained from 0.05~ 0.25 kg of *Rhynchosia nolubilis* can be added in 1 kg of dry weight of the fruits.

The shrub of *Rosa davurica* smells good in flowers and is used for source material of perfume. Especially, it is elucidated that the root be highly effective on the cancer treatment and the prevention of aging as well as the leaf and the fruit contain a large amount of vitamin C. Therefore, *Rosa davurica* is an outstanding herbal plant to prevent and treat adult diseases. It is confirmed in several research institutes including Science Institute of Natural Herbs that *Rosa davurica* contain 20-fold vitamin C (for example, 1,072 mg per 100 g) in the fruit more than lemon.

*Rhynchosia nolubilis* is an herb product in the Korean, is edible and has a remarkable efficacy as medicine. From ancient, *Rhynchosia nolubilis* is called as "drug bean" due to the medicinal use and precisely, it has the highest efficacy among beans, detoxifies strongly, prevents all kinds of diseases and recovers the damage of human tissue rapidly. Especially, *Rhynchosia nolubilis* is reported in a number of Oriental herb documents to have a medicinal effect on diabetes and to improve the renal function. Recently, it is soaked in vinegar to make a sour bean and taken to prevent and treat constipation and adult diseases. In addition, it is illustrated in the ancient document that the drug bean confers a clear and better eye view when eaten in raw material.

In order to attain the above-mentioned objects, the present invention provides a process for production of fermented wine as follows.

Precisely, above all in (A) step for preparation of a fermention solution, 1 ∼ 20 L of pure water is added in 1 kg of crude fruit from deciduous shrub or latifoliate shrub in the family *Araliaelata* and adjusted to 10 ∼ 35° Brix by dissolving sugar. Then, in (B) step for fermentation, yeast is inoculated into the fermented solution and fermented at the range of 20 ∼ 30°C. After the resulting solution reaches a proper stage of fermentation, (C) step for stopping the fermentation is proceeded. The fermented solution is treated to stop the reaction by adding some chemical agents such as ammonium phosphate or potassium sulfate in a proper amount, or by incubating under a low temperature at the range of 0 ∼ 5°C so as to manufacture the fermented wine.

At this moment, if necessary, several additional steps can be performed as follows. In (D) step for filtration, the fermented solution is filtrated after stopping the fermentation and in (E) step for maturation of the fermented solution, the fermented solution filtrated above is maintained to mature under a low temperature at the range of 10 ∼ 25°C.

In the present invention, the fermented wine is supposed to have a good sense of beverage in the range of 10 ∼ 20% of alcohol content and to ferment approximately 50% of the sugar content. Preferably, the fermention, solution is maintained at the range of 20 ∼ 30° Brix in the (A) step for preparation of a fermention solution. Any kind of sugar can be added if it can be fermented in yeast strains. Preferably, the sugar can be selected among glucose, fructose, sucrose, maltose, glutinous starch syrup, molasses, starch (for example, rice or rice powder) and the like. More preferably, sucrose can be used since it may be purchased and managed conveniently. Also, honey can be used as sugar additive instead of sucrose to improve the functional property, although the experimental data is not depicted.

Preferably in the (C) step for stopping the fermentation, the fermented solution is treated to stop the reaction, when the alcohol concentration reaches 10 ~ 15%.

Preferably in the (A) step for preparation of a fermention solution, crude fruit is used in an intact state. Further, the fruit can be reduced to powder before use, used only in the flesh after removing the core of fruit or squeezed to utilize only juice, depending upon requirements.

On the other hand, it costs much to collect and store the natural fruits of *Acanthopanax sessiliflorus* and *Acanthopanax senticosus* in an intact state and to transfer the fermented wine already manufactured in factory, since they grow wildly in the mountainous region or are cultivated in remote farms. Therefore, it is recommended that the fruits should be dried (for example, dried in the wind, dried under light, dried under shade, dried by heat, lyophilized or the like), after collected in the mountainous region and utilized to prepare the fermented wine of the present invention. Depending upon requirements, the fruit can be crude fruit in an intact state, further reduced to powder before use, used only in the flesh after removing the core of fruit or be extracted in a dried state by using essential oil.

In the present invention, any yeast strain can be used if it produces alcohol by the fermentation. Preferably, yeast used for grape wine, for bread, for traditional liquor (so called as Nooruk) or the like can be adopted. More preferably, yeast is pre-cultivated in the small aliquot of fermention solution and then, inoculated to the total fermention solution, since yeast may proliferate slowly at the early stage of growth if it is inoculated directly to the total fermention solution, which can delay the fermentation step. In detail, approximately 3 ∼ 5 L of the fermention solution is collected from 100 L of the total solution, pre-cultivated for about 24 ∼ 48 hours at 30°C after approximately 0.9 ∼ 1.5 g of yeast is inoculated (which is estimated to 0.2 ∼ 0.3 g yeast / 1 L of the total fermention solution) and again inoculated to the total fermention solution.

### EXAMPLES

Practical and presently preferred embodiments of the present invention are illustrated as shown in the following Examples.

However, it will be appreciated that those skilled in the art, on consideration of this disclosure, may make modifications and improvements within the scope of the present invention.

In the present invention, any fruit derived from *Acanthopanax sessiliflorus* and *Acanthopanax senticosus* may give the same products as shown in the experimental data and these two fruit will not be distinguished in following Examples. Therefore, the fruit of *Acanthopanax sessiliflorus* and the fruit of *Acanthopanax senticosus* are simply described as "fruit", "ogapi fruit" or "gasiogapi fruit".

Besides, it is clear for those skilled in the art that the fruit can be reduced to powder to prepare the fermented liquor of the present invention, depending upon convenience, although only natural fruit or dry fruit is utilized as it is in following Examples. Furthermore, it is natural for those skilled in the art that the natural fruit or the dry fruit can also be treated previously to extract effective constituents, filtrated immediately in the late stage of the (A) step for preparation of a fermention solution to exclude the remained fruit and continued to proceed the (B) step of fermentation as follows, even if the fruit is adopted in the (A) step for preparation of a fermention solution, proceeded the next steps and filtrated after the fermentation is completed, in following Examples.

### <Example 1> Production of fermented wine by using crude fruit as main material

In order to prepare the fermented wine of the present invention, crude Ogapi fruit was utilized as it is and not dried.

Above all, the crude fruit of *Acanthopanax* was washed by using pure water and wiped a little to remove moisture on the surface. To 5 kg of crude fruit, 4.5 L of pure water (9 L of pure water per 1 kg of crude fruit) was added, adjusted to 24° Brix by dissolving sugar and filled to approximately 50 L of fermention solution. (the step for preparation of a fermention solution)

3 L of fermention solution prepared above was separated and 15 g of commercially available yeast for bread was inoculated. The culture solution inoculated in the fermention solution was pre-incubated for 24 hours at 30°C and again inoculated into the whole fermention solution prepared above. The resulting solution was processed at 20 - 25°C to be further fermented (the step for fermentation), and the alcohol concentration in the fermented solution was checked every 24 hours. When the alcohol concentration was over 12.0%, 200 ppm of potassium sulfite per 1 L of the fermented solution was added to the fermented solution in order to stop the reaction (the step for stopping the fermentation).

After stopping the fermentation, the resulting solution was filtrated and purified. As a result, the fermented wine of the present invention made from the crude Ogapi fruit as main material was manufactured. **<Example 2> Production of fermented wine by using crude fruit as main material**

The fermented wine of the present invention was prepared to contain *Rosa davurica* and *Rhynchosia nolubilis* extract.

In dry *Rosa davurica,* leaves, roots, stems and fruits were washed clear, pulverized and then extracted through water heating for 12 ∼ 15 hours at 70 ∼ 95°C after 7-fold water more than the dry weight was added, with the extractor in which a refrigerating condenser was installed to prevent effective components from evaporation. Again, the extract obtained above was filtrated and condensed under reduced pressure to prepare the *Rosa davurica* extract of the present invention.

*Rhynchosia nolubilis* was reduced to powder and extracted three times through circulation by using hexane to remove lipid components. Then, the resultant was extracted through water heating for 5 hours at 90°C, repeatedly extracted three times and filtrated. The supernatant obtained above was concentrated under reduced pressure and dried under vacuum to prepare the *Rhynchosia nolubilis* extract of the present invention.

In the step for preparation of fermention solution described in Example 1, the water extracts were added to 0.15 kg of *Rosa davurica* and 0.15 kg of *Rhynchosia nolubilis* per 1 kg of dry weight of the above-mentioned natural fruit and proceeded by using the same procedure as demonstrated in Example 1. As a result, the fermented wine of the present invention made from the crude fruit of *Acanthopanax sp.* as main material was manufactured.

### <Example 3> Production of fermented wine by using dry fruit as main material I

In order to prepare the fermented wine of the present invention, dry Ogapi fruit was utilized as raw material.

Above all, the crude fruit of *Acanthopanax sp.* was dried in the shade to prepare the dry fruit.

Then, the dry fruit was washed by using pure water and wiped off to remove moisture on the surface. To 4 kg of dry fruit, 4.4 L of pure water (11 L of pure water per 1 kg of dry fruit) was added, adjusted to 24° Brix by dissolving sugar and filled to approximately 45 L of fermention solution. (the step for preparation of fermention solution)

The same procedure was performed as described in above-mentioned Example 1. As a result, the fermented wine of the present invention made from the dry fruit of *Acanthopanax sp.* as main material was manufactured.

### <Example 4> Production of fermented wine by using dry fruit as main material II

In order to prepare the fermented wine of the present invention, the dry Ogapi fruit was utilized as raw material.

Above all, the natural fruit of *Acanthopanax* was dried in the shade to prepare the dry fruit.

The resulting dry fruit was washed by using pure water and wiped off to remove moisture. To 4 kg of dry fruit, 22 L of pure water (5.5 L of pure water per 1 kg of dry fruit) was added, adjusted to 24° Brix by dissolving sugar and extracted through water heating for 5 hours at 50°C primarily. Afterward, 22 L of pure water was added, adjusted to 24° Brix by dissolving sugar and again extracted through water heating for 5 hours at 50°C secondarily. The extracted solution obtained above was filtrated to prepare approximately 45 L of the fruit extract (fermention solution) (the step for preparation of fermention solution)

The same procedure was accomplished as described in above-mentioned Example 1. As a result, the fermented wine of the present invention made from the fruit of *Acanthopanax sp*. as main material was manufactured.

### <Example 5> Production of fermented wine by using dry fruit as main material III

In order to prepare the fermented wine of the present invention, the dry Ogapi fruit was utilized as raw material.

In the step for preparation of fermention solution as described in above-mentioned Example 4, the water extract of *Rosa davurica* and the water extract *Rhynchosia nolubilis* prepared in Example 2, were added in the same content. Then, the same procedure was performed as described in Example 4. As a result, the fermented wine of the present invention made from the fruit of *Acanthopanax sp*. as main material was manufactured.

### INDUSTRIAL APPLICABILITY

As illustrated above, the present invention provides a process for the preparation of a fermented wine made from fruits of *Acanthopanax sessiliflorus* or *Eleutherococcus senticosus,* which exploits the Ogapi fruit for practical use even though it might be left alone or discarded so far and includes effective constituents more than typical wines

Therefore, the fermented wine of the present invention is a milder wine similar to grape wine in the characteristics and distinguished from other stronger liquors and sustains the pharmaceutical efficacy of *Acanthopanax sp.* Furthermore, the fermented wine of the present invention is a new application for Ogapi fruit which is so far left and discarded in the field and may result in economical effect to increase the benefits of farmhouses.

## Claims

1. A process for the preparation of fermented wine made principally from the fruit of a deciduous or latifoliate shrub in the family *Araliaelata,* the process comprising the steps of:
(a) preparing a fermentation solution by adding from 1 to 20 litres of pure water for each 1 kg of crude fruit of the aforesaid shrub and adjusting the solution to from 10 to 35° Brix by dissolving sugar in it,
(b) carrying out a fermentation reaction by inoculating yeast into the solution prepared in step (a) and maintaining the solution at from 20 to 30°C while fermentation takes place, and
(c) treating the solution so as to stop the fermentation.

2. A process according to claim 1 in which the crude fruit used in step (a) comprises one of whole fruit, powdered fruit, the flesh of the fruit from which the core has been removed, and the juice of the fruit extracted by squeezing.

3. A process for the preparation of fermented wine made principally from the fruit of a deciduous or latifoliate shrub in the family *Araliaelata,* the process comprising the steps of:
(aa) drying crude fruit of the aforesaid shrub,
(a) preparing a fermentation solution by adding from 2 to 30 litres of pure water for each 1 kg of dried fruit prepared in step (aa) and adjusting the solution to from 10 to 35° Brix by dissolving sugar in it,
(b) carrying out a fermentation reaction by inoculating yeast into the solution prepared in step (a) and maintaining the solution at from 15 to 30°C while fermentation takes place, and
(c) treating the solution so as to stop the fermentation.

4. A process according to claim 3 in which the crude fruit used in step (a) comprises one of dried whole fruit, dried powdered fruit, dried flesh of the fruit from which the core has been removed and an extract of dried fruit obtained using an essential oil.

5. A process according to any preceding claim in which the fruit is from the shrub *Acanthopanax sessiliflorus* or *Acanthopanax senticosus* (or *Eleutherococcus senticosus).*

6. A process according to claim 1, the process comprising the further steps of:
(d) filtering the solution after fermentation has stopped, and
(e) maturing the filtered solution.

7. A process according to any preceding claim in which the solution in step (a) is adjusted to from 20 to 30° Brix.

8. A process according to any preceding claim in which the fermentation is stopped in step (c) when the alcohol concentration reaches from 10 to 15%.

9. A process according to any preceding claim in which an aqueous extract of *Rosa davurica* is added to the solution prepared in step (a) in an amount of from 0.05 to 0.25 kg of *Rosa davurica* per 1 kg dry weight of crude fruit.

10. A process according to any preceding claim in which an aqueous extract of *Rhynchosia nolubilis* is added to the solution prepared in step (a) in an amount of from 0.05 to 0.25 kg of *Rhynchosia nolubilis* per 1 kg dry weight of crude fruit.

## Patentansprüche

1. Verfahren zur Zubereitung eines fermentierten Weines, welcher in der Hauptsache aus der Frucht eines immergrünen oder Laubstrauchs in der Familie der Araliaelata stammt, wobei das Verfahren folgende Schritte aufweist:
(a) Zubereiten einer Fermentationslösung durch Zufügen von 1 bis 20 Liter reines Wasser für je 1 kg Rohfrucht des zuvor genannten Strauches und Einstellen der Lösung auf 10 bis 35 °Brix durch Lösen von Zucker hierin,
(b) Ausführen einer Fermentationsreaktion durch Impfen von Hefe in die in Schritt (a) präparierte Lösung und Halten der Lösung bei 20 bis 30 °C, während die Fermentation stattfindet, und
(c) Behandeln der Lösung, um die Fermentation zu beenden.

2. Verfahren nach Anspruch 1, bei dem die Rohfrucht, welche in Schritt (a) verwendet wird, eine der folgenden Formen hat: die ganze Frucht, die pulverisierte Frucht, das Fleisch der Frucht, aus welcher der Kern entfernt worden ist und den Saft der Frucht, welcher durch Auspressen extrahiert wurde.

3. Verfahren zur Zubereitung eines fermentierten Weins, welcher im Wesentlichen aus der Frucht eines immergrünen oder Laubstrauchs in der Familie Araliaelata stammt, wobei das Verfahren folgende Schritte aufweist:
(aa) Trocknen einer rohen Frucht des zuvor genannten Strauches,
(a) Zubereiten einer Fermentationslösung durch Zugabe von 2 bis 30 Liter reines Wasser für jeweils 1 kg getrockneter Frucht, welche in Schritt (aa) zubereitet wurde und Einstellen der Lösung auf 10 bis 35 °Brix durch Lösen von Zucker hierin,
(b) Ausführen einer Fermentationsreaktion durch Einimpfen von Hefe in die in Schritt (a) präparierte Lösung und Halten der Lösung bei 15 bis 30 °C, währen die Fermentation stattfindet, und
(c) Behandeln der Lösung, um die Fermentation zu beenden.

4. Verfahren nach Anspruch 3, bei dem die Rohfrucht, welche in Schritt (a) verwendet wird, eine von folgenden Formen aufweist: die ganze Frucht, die getrocknete pulverisierte Frucht, das getrocknete Fleisch der Frucht, aus welcher der Kern entfernt worden ist, und ein Extrakt getrockneter Frucht, welche unter Verwendung eines ätherischen Öls erhalten wurde.

5. Verfahren nach einem der vorhergehenden Ansprüche, wobei die Frucht von dem Strauch *Acanthopanax sessiliflorus* oder *Acanthopanax senticosus* (oder *Eleutherococcus senticosus)* stammt.

6. Verfahren nach Anspruch 1, das folgende weitere Schritte aufweist:
(d) Filtern der Lösung, nachdem die Fermentation beendet wurde, und
(e) Reifen der gefilterten Lösung.

7. Verfahren nach einem der vorhergehenden Ansprüche, wobei die Lösung in Schritt (a) auf 20 bis 30 °Brix eingestellt wird.

8. Verfahren nach einem der vorhergehenden Ansprüche, bei dem die Fermentation in Schritt (c) beendet wird, wenn die Alkoholkonzentration den Bereich von 10 bis 15 % erreicht.

9. Verfahren nach einem der vorhergehenden Ansprüche, bei dem ein wässriges Extrakt von *Rosa davurica* der in Schritt (a) präparierten Lösung in einer Menge von 0,05 bis 0,25 kg von *Rosa davurica* pro kg Trockengewicht der rohen Frucht hinzugefügt wird.

10. Verfahren nach einem der vorhergehenden Ansprüche, bei welchem ein wässriges Extrakt von *Rhynchosia nolubilis* der in Schritt (a) präparierten Lösung in einer Menge von 0,05 bis 0,25 kg von *Rhynchosia nolubilis* pro kg Trockengewicht der rohen Frucht hinzugefügt wird.

## Revendications

1. Procédé pour la préparation de vin fermenté fait principalement à partir du fruit d'un arbuste à feuillage caduque ou latifolié de la famille *Araliaelata,* le procédé comprenant les étapes de :
(a) préparer une solution de fermentation en ajoutant de 1 à 20 litres d'eau pure pour chaque 1 kg de fruit brut de l'arbuste mentionné ci-dessus et ajuster la solution entre 10 et 35° Brix en dissolvant du sucre dans celle-ci,
(b) effectuer une réaction de fermentation en inoculant une levure dans la solution préparée à l'étape (a) et maintenir la solution entre 20 et 30°C pendant que la fermentation a lieu, et
(c) traiter la solution de manière à stopper la fermentation.

2. Procédé selon la revendication 1, dans lequel le fruit brut utilisé à l'étape (a) comprend l'un parmi un fruit entier, un fruit en poudre, la pulpe du fruit duquel le noyau a été retiré, et le jus du fruit extrait par pression.

3. Procédé pour la préparation de vin fermenté fait principalement à partir du fruit d'un arbuste à feuillage caduque ou latifolié de la famille *Araliaelata,* le procédé comprenant les étapes consistant à :
(aa) sécher un fruit brut de l'arbuste mentionné ci-dessus,
(a) préparer une solution de fermentation en ajoutant de 2 à 30 litres d'eau pure pour chaque 1 kg de fruit séché préparé à l'étape (aa) et ajuster la solution entre 10 et 35° Brix en dissolvant du sucre dans celle-ci,
(b) effectuer une réaction de fermentation en inoculant une levure dans la solution préparée à l'étape (a) et maintenir la solution entre 15 et 30°C pendant que la fermentation a lieu, et
(c) traiter la solution de manière à stopper la fermentation.

4. Procédé selon la revendication 3, dans lequel le fruit brut utilisé à l'étape (a) comprend l'un parmi un fruit entier séché, un fruit en poudre séché, la pulpe séchée du fruit duquel le noyau a été retiré et un extrait de fruit séché obtenu en utilisant une huile essentielle.

5. Procédé selon l'une quelconque des revendications précédentes, dans lequel le fruit provient de l'arbuste *Acanthopanax sessiliflorus* ou *Acanthopanax senticosus* (ou *Eleutherococcus senticosus).*

6. Procédé selon la revendication 1, le procédé comportant les étapes supplémentaires de:
(d) filtrer la solution après que la fermentation a stoppé, et
(e) amener à maturation la solution filtrée.

7. Procédé selon l'une quelconque des revendications précédentes, dans lequel la solution à l'étape (a) est ajustée entre 20 et 30° Brix.

8. Procédé selon l'une quelconque des revendications précédentes, dans lequel la fermentation est stoppée à l'étape (c) lorsque la concentration en alcool atteint entre 10 et 15%.

9. Procédé selon l'une quelconque des revendications précédentes, dans lequel un extrait aqueux de *Rosa davurica* est ajouté à la solution préparée à l'étape (a) en une quantité de 0,05 à 0,25 kg de *Rosa davurica* par 1 kg de poids sec de fruit brut.

10. Procédé selon l'une quelconque des revendications précédentes, dans lequel un extrait aqueux de *Rhynchosia nolubilis* est ajouté à la solution préparée à l'étape (a) en une quantité de 0,05 à 0,25 kg de *Rhynchosia nolubilis* par 1 kg de poids sec de fruit brut.
